# EUROPEAN PATENT APPLICATION

(11) **EP 1 942 628 A1**
(43) Date of publication of application: **09.07.2008**
(21) Application number: 07250026.7
(22) Date of filing: 04.01.2007
(51) Int. Cl.: H04L 29/06, H04Q 7/38, H04L 12/28

(54) **Communication processing apparatus and method**

(71) Applicant: Inventec Appliances Corporation, Wagu Shiang T'ai pei 248 (TW)
(72) Inventor: Lai, Cheng-Shing, Neihu District Taipei City 114 (TW); Zheng, Yong, Nanking City (CN); Zhang, Adam, Nanking City (CN)
(74) Representative: White, Duncan Rohan

(57) **Abstract**

An apparatus and a method for communication processing are disclosed. The apparatus (210) includes a network connecting unit, a wireless connecting unit, and a processing unit. The network connecting unit is for use in connecting with internet (240) and communicating a first communicating signal with the internet (240). The wireless connecting unit is for use in connecting with a portable communication device (220) and communicating a second communicating signal with the portable communication device (220) through a first communicating connection or a second communicating connection. The processing unit is used for converting the first communicating signal into the second communicating signal and vice versa. When a communication request is received by the communication processing apparatus (210), an available or a stable communicating connection can be established, such that the possible interruption of the communication can be avoided and the cost of communication is also reduced. The first communicating connection may be a Bluetooth or infrared connection, the second communicating connection may be a GSM, PHS or CDMA connection.

## Description

### BACKGROUND OF THE INVENTION

### 1. Field of the Invention

The present invention generally relates to a communication apparatus, in particular, to an apparatus and a method for processing communication between a portable communication device and internet.

### 2. Description of Related Art

As the communication network advances, the amount of communication between people using various types of equipments increases tremendously. In recent years, the rapid pace for the development of electronic devices has created various mobile communication systems such as the GSM, the CDMA and the 3G, therefore an unprecedented number of users are tapped into the communication network through mobile phone devices.

To enhance the features of a portable mobile phone devices, additional functions are frequently incorporated. The internet access function is a popular one of such functions. Without cable connection, users may use the mobile phone to login network for browsing websites, sending emails, chatting with friends, shopping, etc. The diversity of these novel functions makes the mobile phone more practical and valuable and brings unlimited business benefits for the telecommunication companies.

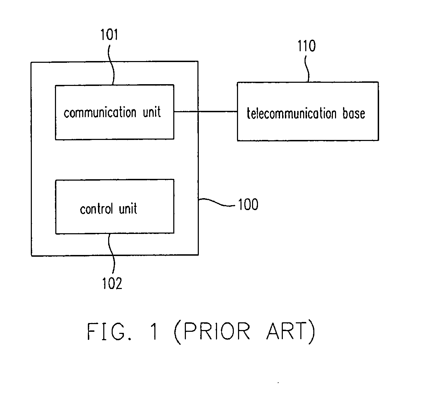

Fig. 1 is a schematic diagram illustrating a conventional portable communication device. Referring to Fig. 1, the portable communication device 100 includes a communication unit 101 and a control unit 102, wherein the control unit 102 is used for sending a control signal to the communication unit 101. The communication unit 101 is used for connecting with a telecommunication base 110 through a wireless communication protocol and communicating the communication signal with the telecommunication base 110 when receiving the control signal. The portable communication device 100 supports a communication protocol, such that it can communicate with other devices through the telecommunication base 110.

However, no matter for the communication function or for the internet connecting function, to communicate over the telecommunication base 110 usually brings a large sum of communication fee and that makes these functions undesirable. Furthermore, for those portable communication devices supporting lower power wireless communication protocol like Personal Handy-phone System (PHS), the communication signal is easily blocked by solid objects such as high buildings. As a result, the portable communication device is not able to hold the on-line state stably, which is very inconvenient for the users.

### SUMMARY OF THE INVENTION

Accordingly, an objective of the present invention is to provide a communication processing apparatus for connecting a portable communication device with internet, so as to increase the convenience of communication.

Another objective of the present invention is to provide a communication processing method. By using a communication processing apparatus as an intermediate coordinator, a better and more economic approach for connecting a portable communication device will be chosen, such that the cost of communication can be reduced.

In order to achieve the aforementioned and other objectives, the present invention provides a communication processing apparatus, which comprises a network connecting unit, a wireless connecting unit, and processing unit. Wherein, the network connecting unit is for use in connecting with a remote device through internet and communicating a first communicating signal with the remote device. The wireless connecting unit is used for detecting a connecting signal sent by a portable communication device and connecting with the portable communication device, and communicating a second communicating signal with the portable communication device through a first communicating connection or a second communicating connection according to the connecting signal. The processing unit, coupled to the network connecting unit and the wireless connecting unit, is for converting the first communicating signal into the second communicating signal and vice versa.

According to the communication processing apparatus described in one embodiment of the present invention, the communication processing apparatus further comprises an interface unit, which is for use in providing a user interface for users to operate the communication between the portable communication device and the remote device.

According to the communication processing apparatus described in one embodiment of the present invention, the communication processing apparatus further comprises a storage unit for storing the first communicating signal and the second communicating signal.

According to the communication processing apparatus described in one embodiment of the present invention, the network connecting unit supports an internet protocol for establishing the connection with the remote device.

According to the communication processing apparatus described in one embodiment of the present invention, the wireless connecting unit supports a first wireless communication protocol for establishing the first communicating connection, wherein the first wireless communication protocol comprises a Bluetooth wireless communication protocol or an infrared wireless communication protocol. In addition, the wireless connecting unit further supports a second wireless communication protocol for establishing the second communicating connection, wherein the the second wireless communication protocol comprises a Personal Handy-phone System (PHS) communication protocol, a Global System for Mobile communications (GSM) protocol, or a Code Division Multiple Access (CDMA) communication protocol.

According to the communication processing apparatus described in one embodiment of the present invention, the second communicating connection between the communication processing apparatus and the portable communication device is established by a telecommunication base station.

The present invention provides a communication processing method suitable for a communication processing apparatus. The method includes following steps. First, a connecting signal sent by a portable communication device is detected. Next, the portable communication device is connected through a first communicating connection or a second communicating connection according to the connecting signal. Then, a communicating request is received from the portable communication device and a remote device is connected through internet according to the communicating request. Finally, a communicating signal is transferred between the portable communication device and the remote device.

According to the communication processing method described in one embodiment of the present invention, wherein before connecting with a portable communication device, the portable communication device detects the communication processing apparatus through a first wireless communicating protocol. If the signal of the first wireless communicating protocol is detected, the first communicating connection is established. Otherwise, the second communicating connection is established.

The present invention provides a communication processing method suitable for a communication processing apparatus. The present invention includes following steps. First, a communicating request is received from a remote device through internet. Next, a portable communication device according to the communicating request is detected and a connecting signal sent by the communication device is received. Then, a portable communication device is connected through a first communicating connection or a second communicating connection according to the connecting signal. Finally, a communicating signal is transferred between the portable communication device and the remote device.

According to the communication processing method described in one embodiment of the present invention, wherein before connecting with the portable communication device, the communication processing apparatus detects the portable communication device through a first wireless communicating protocol. If the signal of the first wireless communicating protocol is detected, the first communicating connection is established. Otherwise, the second communicating connection is established.

The present invention adopts an intermediate communication processing apparatus to connect a portable communication device with internet or a remote device in the internet. Wherein, two kinds of communicating connection can be selected according to a detected connecting signal, such that the possible interruption of the communication can be avoided and the cost of communication is also reduced.

In order to make the aforementioned and other objectives, features and advantages of the present invention comprehensible, preferred embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 is a schematic diagram illustrating a conventional portable communication device.

Fig. 2 is a schematic diagram illustrating a communication system according to an embodiment of the present invention.

Fig. 3 is a schematic diagram illustrating the communication processing apparatus 210 according to an embodiment of the present invention.

Fig. 4 is a flowchart illustrating a communication processing method according to an embodiment of the present invention.

Fig. 5 is a flowchart illustrating a communication processing method according to an embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

As the competition between the telecommunication companies rises, many subsidiary wireless communication modules, such as Bluetooth wireless modules or infrared wireless modules, have been integrated in a single portable communication device. These modules may help providing a secondary approach for communication whenever the main communication function is not available, for example, the wireless signal sent from the telecommunication base is blocked. The present invention takes advantages of these "substitutes" for efficiently and economically linking the communication. The embodiments indicating the details of the present invention are provided as follows.

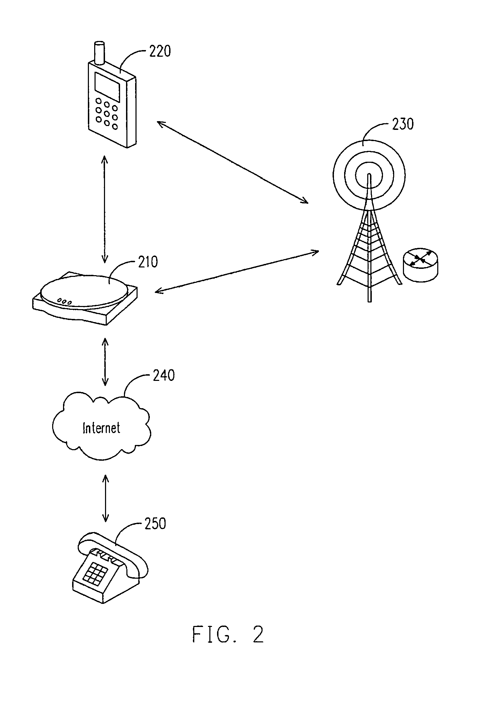

Fig. 2 is a schematic diagram illustrating a communication system according to an embodiment of the present invention. Referring to Fig. 2, the communication system includes a communication processing apparatus 210, a portable communication device 220, a telecommunication base 230, internet 240, and a remote device 250. Wherein, the communication processing apparatus 210 can communicate a first communicating signal with the portable communication device 220 according to a first wireless communication protocol such as Bluetooth or infrared wireless communication protocol. On the other hand, the communication processing apparatus 210 may communicate a second communicating signal with the portable communication device 220 through the telecommunication base 230 according to a second wireless communication protocol such as Personal Handy-phone System (PHS) communication protocol, a Global System for Mobile communications (GSM) protocol, or a Code Division Multiple Access (CDMA) communication protocol. Moreover, the communication processing apparatus 210 can further communicate with the internet 240 through an internet protocol and communicate a third communicating signal with a remote device 250 over the internet 240. In the present embodiment, the remote device 250 may be another portable communication device, a home telephone, or an internet server, but not limited to them.

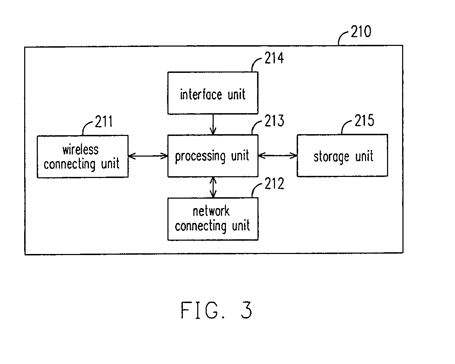

Fig. 3 is a schematic diagram illustrating the communication processing apparatus 210 according to an embodiment of the present invention. Referring to Fig. 2 and Fig. 3, the communication processing apparatus 210 includes a wireless connecting unit 211, a network connecting unit 212, a processing unit 213, an interface unit 214, and a storage unit 215.

The wireless connecting unit 211 is used for detecting a connecting signal sent by the portable communication device 220, and connecting with the portable communication device 220 and communicating a first communicating signal with the portable communication device 220 with a short distance wireless communication protocol such as Bluetooth or infrared wireless communication protocol according to the detected connecting signal. The wireless connecting unit 211 may also be used for connecting with the portable communication device 220 via the telecommunication base 230 and communicating a second communicating signal with the portable communication device 220 according to a long distance wireless communication protocol such as Personal Handy-phone System (PHS) communication protocol, a Global System for Mobile communications (GSM) protocol, or a Code Division Multiple Access (CDMA) communication protocol according to the detected connecting signal.

The network connecting unit 212 is used for connecting with the remote device 250 through the internet 240 according to an internet protocol and communicat ing a network communicating signal with the remote device 250. The processing unit 213 is coupled to both of the wireless connecting unit 211 and the network connecting unit 212, and used for converting the first communicating signal or the second communicating signal into a network communicating signal and vice versa, so as to establish a communication connection between the remote device 250 and the portable communication device 220.

The interface unit 214 is used for providing a user interface for users to operate the communication between the portable communication device 220 and the remote device 250. The storage unit 215 is used for storing the first communicating signal, the second communicating signal, and/or the network communicating signal.

In the present embodiment, the communication processing apparatus 210 supports two kinds of wireless communication protocols so that a suitable connection mode can be selected according to different circumstances. For example, when the communication processing apparatus 210 is used indoor, a short distance wireless connection is established, such that the communicating signal is not affected by the block of architecture. On the other hand, when the communication processing apparatus 210 is carried by a user and used outdoor, a long distance wireless connection may be adopted. The connection can be built up by the telecommunication base 230. The use of short or long distance wireless connection may be determined according to a previously detected connecting signal sent by the communication processing apparatus 210. In addition, the communication processing apparatus 210 supports an internet protocol. With the support of the communication processing apparatus 210, the portable communication device 220 can connect with the remote device 250 over the internet instead of using a conventional communication system. Therefore, large sum of communication expense would be saved.

The communication for the communication processing apparatus includes two states, which are referred to a calling state and a receiving state. In the calling state, a communicating request is sent from the portable communication device to the communication processing apparatus for requesting a connection with the remote device. In the receiving state, a communicating request is sent from the remote device to the communication processing apparatus for requesting a connection with the portable communication device. Two embodiments describing the details of the communication processing method corresponding to these two states are provided herein.

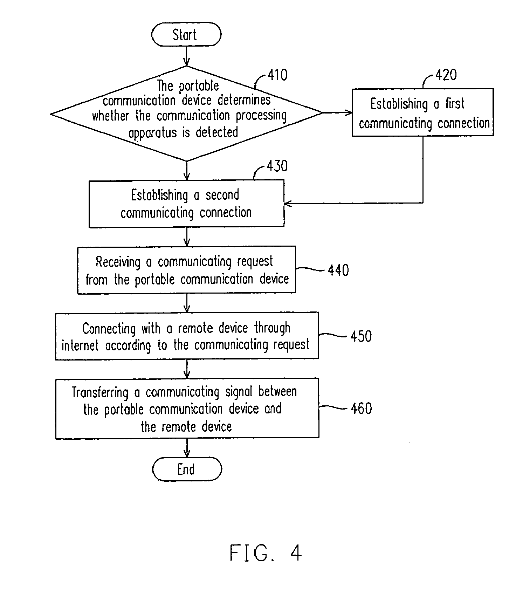

Fig. 4 is a flowchart illustrating a communication processing method according to an embodiment of the present invention. The communication processing method of the present embodiment is applied to the communication processing apparatus as described in the foresaid embodiment and used in the calling state of the communication processing apparatus.

Referring to Fig. 4, in step 410, the portable communication device detects the communication processing apparatus through a first wireless communicating protocol. If the communication processing apparatus is detected, a first communicating connection between the portable communication device and the communication processing apparatus is established (step 420). Otherwise, a second communicating connection between the portable communication device and the communication processing apparatus is established by a telecommunication base station (step 430). That means the portable communication device may try the first approach first when a communicating request is launched by a user. Once the first approach failed, a second approach is implemented. On the other hand, the portable communication device may try the both approaches at the same time and determine which approach is better for the use according to different circumstances such as signal strength or economical consideration.

In the present embodiment, the first wireless communicating protocol can be a short distance wireless communicating protocol such as Bluetooth or an infrared wireless communication protocol. The second communicating connection is built up through a second wireless communicating protocol such as Personal Handy-phone System (PHS) communication protocol, Global System for Mobile communications (GSM) protocol, or Code Division Multiple Access (CDMA) communication protocol.

In step 440, the communication processing apparatus receives the communicating request sent from the portable communication device. The communicating request may contain the caller's and the receiver's information such as telephone number, and IP address, etc. Accordingly, the communication processing apparatus can connect with a remote device through internet according to the communicating request (step 450). The connection may be built up by using a Voice over Internet Protocol (VoIP) software such as Skype, but not limited to it.

Finally, a communicating signal is transferred between the portable communication device and the remote device (step 460). Therefore, the user of the portable communication device may make a conversation with his friend on the remote side, or send a message or e-mail to a remote mailbox. If the portable communication device connects with the communication processing apparatus using the first approach, no communication fee from the telecommunication company is expected.

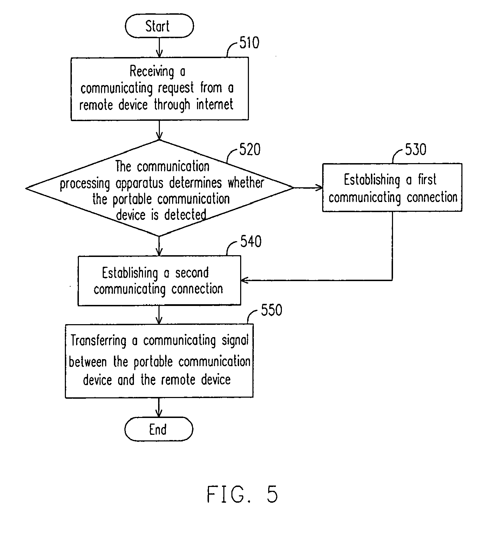

On the other hand, in a receiving state, the portable communication device receives a call from the remote device. Fig. 5 is a flowchart illustrating a communication processing method according to an embodiment of the present invention. The method is also applied to the communication processing apparatus as described in the foresaid embodiment.

Referring to Fig. 5, in step 510, the communication processing apparatus receives a communicating request from a remote device through internet. The user of the remote device may use a VoIP software to create the communicating request, wherein the communicating request contains the caller's and the receiver's information such as telephone number, IP address, etc.

In step 520, the communication processing apparatus detects the portable communication device through a first wireless communicating protocol. If the signal of the first wireless communicating protocol is detected, a first communicating connection between the portable communication device and the communication processing apparatus is established (step 530). Otherwise, a second communicating connection between the portable communication device and the communication processing apparatus is established (step 540). Compare to the previous embodiment, the communication processing apparatus does the detecting procedure by itself. In the end, a best approach for connecting the communication processing apparatus and the portable communication device is selected.

Similar to the previous embodiment, in the present embodiment the first wireless communicating protocol can be a short distance wireless communicating protocol such as Bluetooth or an infrared wireless communication protocol. The second communicating connection is built up through a second wireless communicating protocol such as Personal Handy-phone System (PHS) communication protocol, Global System for Mobile communications (GSM) protocol, or Code Division Multiple Access (CDMA) communication protocol.

When the connection is established, a communicating signal is transferred between the portable communication device and the remote device (step 550). Therefore, the user of the remote communication device just needs to dial a number and then the communication processing apparatus helps finding a best approach to connect with the user of the portable communication device, such that a efficient and economic communication way is obtained.

To sum up, the apparatus and method for communication processing of the present invention at least have following advantages.

1. Through the support of the communication processing apparatus, the portable communication device can connect with the internet or a remote device over the internet using a VoIP function. Therefore, large sum of communication expense is saved.

2. By using a short distance wireless communication protocol, the transmission rate can be increased and transmission quality can be held steady, such that a higher level multi-media function can be realized.

3. By using the built-in Bluetooth or infrared device that already disposed in the portable communication device, no extra hardware installation is needed.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A communication processing apparatus, comprising:
a network connecting unit for connecting with internet and communicating a first communicating signal with the internet;
a wireless connecting unit for detecting a connecting signal sent by a portable communication device and connecting with the portable communication device, and communicating a second communicating signal with the portable communication device through a first communicating connection or a second communicating connection according to the connecting signal; and
a processing unit, coupled to the network connecting unit and the wireless connecting unit, for converting the first communicating signal into the second communicating signal and vice versa.

2. The communication processing apparatus as recited in Claim 1, wherein the network connecting unit connects with a remote device through internet and communicates the first communicating signal with the remote device.

3. The communication processing apparatus as recited in Claim 1 or 2, further comprising:
an interface unit for providing a user interface for users to operate the communication between the portable communication device and the remote device.

4. The communication processing apparatus as recited in Claim 1, 2 or 3, further comprising:
a storage unit for storing the first communicating signal and the second communicating signal.

5. The communication processing apparatus as recited in any one previous Claim, wherein the network connecting unit supports an internet protocol for establishing the connection with the internet.

6. The communication processing apparatus as recited in any one previous Claim, wherein the wireless connecting unit supports a first wireless communication protocol for establishing the first communicating connection, and the first wireless communication protocol comprises a Bluetooth wireless communication protocol or an infrared wireless communication protocol.

7. The communication processing apparatus as recited in any one preceding Claim, wherein the wireless connecting unit supports a second wireless communication protocol for establishing the second communicating connection, and the second wireless communication protocol comprises a Personal Handy-phone System (PHS) communication protocol, a Global System for Mobile communications (GSM) protocol, or a Code Division Multiple Access (CDMA) communication protocol.

8. The communication processing apparatus as recited in Claim 7, wherein the second communicating connection between the communication processing apparatus and the portable communication device is established by a telecommunication base station.

9. A communication processing method, for use in a communication processing apparatus, comprising:
detecting a connecting signal sent by a portable communication device;
connecting with the portable communication device through a first communicating connection or a second communicating connection according to the connecting signal;
receiving a communicating request from the portable communication device;
connecting with internet according to the communicating request; and
transferring a communicating signal between the portable communication device and the internet.

10. The communication processing method as recited in Claim 9, wherein the step of connecting with internet according to the communicating request further comprising:
connecting with a remote device through internet according to the communicating request; and
transferring a communicating signal between the portable communication device and the remote device.

11. The communication processing method as recited in Claim 9 or 10, wherein
the communication processing apparatus supports a first wireless communication protocol for establishing the first communicating connection, and the first wireless communication protocol comprises a Bluetooth wireless communication protocol or an infrared wireless communication protocol; and
the communication processing apparatus supports a second wireless communication protocol for establishing the second communicating connection, and the second wireless communication protocol comprises a Personal Handy-phone System (PHS) communication protocol, a Global System for Mobile communications (GSM) protocol, or a Code Division Multiple Access (CDMA) communication protocol.

12. The communication processing method as recited in Claim 11, wherein before the step of connecting with the portable communication device, the method further comprising:
the portable communication device detecting the communication processing apparatus through the first wireless communicating protocol;
if the signal of the first wireless communicating protocol is detected, the first communicating connection is established; and
if the signal of the first wireless communicating protocol is not detected, the second communicating connection is established.

13. The communication processing method as recited in Claim 11 or 12, wherein the second communicating connection is established by a telecommunication base station.

14. A communication processing method, for a communication processing apparatus, comprising:
receiving a communicating request from internet;
detecting a portable communication device according to the communicating request and receiving a connecting signal sent by the communication device;
connecting with the portable communication device through a first communicating connection or a second communicating connection according to the connecting signal; and
transferring a communicating signal between the portable communication device and the internet.

15. The communication processing method as recited in Claim 14, wherein the step of receiving a communicating request further comprising:
receiving a communicating request from a remote device through internet; and
transferring a communicating signal between the portable communication device and the remote device.

16. The communication processing method as recited in Claim 14 or 15, wherein the communication processing apparatus supports a first wireless communication protocol for establishing the first communicating connection, and the first wireless communication protocol comprises a Bluetooth wireless communication protocol or an infrared wireless communication protocol; and
the communication processing apparatus supports a second wireless communication protocol for establishing the second communicating connection, and the second wireless communication protocol comprises a Personal Handy-phone System (PHS) communication protocol, a Global System for Mobile communications (GSM) protocol, or a Code Division Multiple Access (CDMA) communication protocol.

17. The communication processing method as recited in Claim 16, wherein before connecting with the portable communication device, the method further comprising:
detecting the portable communication device through the first wireless communicating protocol;
if the signal of the first wireless communication protocol is detected, the first communicating connection is established; and
if the signal of the first wireless communication protocol is not detected, the second communicating connection is established.

18. The communication processing method as recited in claim 16 or 17, wherein the second communicating connection is established by a telecommunication base station.
